(19) Europäisches Patentamt

European Patent Office

Office européen des brevets

(11) Publication number: 0 283 100 B1

# (12) EUROPEAN PATENT SPECIFICATION

(45) Date of publication of patent specification: 04.03.92

(51) Int. Cl.⁵: **B27K 3/02**, B27K 3/52

(21) Application number: 88200502.8

(22) Date of filing: 18.03.88

(54) A wood preservative and a method of preserving wood.

(30) Priority: 20.03.87 NL 8700658

(43) Date of publication of application:
21.09.88 Bulletin 88/38

(45) Publication of the grant of the patent:
04.03.92 Bulletin 92/10

(84) Designated Contracting States:
AT BE CH DE ES FR GB GR IT LI LU NL SE

(56) References cited:
EP-A- 0 125 728
EP-A- 0 152 976
WO-A-83/03997
DE-A- 3 339 197
DE-C- 732 671

(73) Proprietor: WINDOW CARE B.V.
Avelingenweg 6a
NL-4202 MN Gorinchem(NL)

(72) Inventor: Blom, Cornelis Willem
Troubadourshof 1
NL-2171 TG Sassenheim(NL)
Inventor: Vugts, Theodorus Gijsbertus
Burg. Verwielstraat 1
NL-5141 BD Waalwijk(NL)

(74) Representative: Smulders, Theodorus A.H.J.,
Ir. et al
Vereenigde Octrooibureaux Nieuwe Parklaan
107
NL-2587 BP 's-Gravenhage(NL)

## Description

This invention relates to a wood preservative comprising a substance that is toxic to wood-attacking micro-organisms and/or insects and a water-soluble and water-swellable substance, and further relates to a method of preserving wood by treating the wood with a wood preservative comprising a substance that is toxic to wood-attacking micro-organisms and/or insects and a water-swellable substance.

Similar wood preserving compositions and methods are disclosed in EP-A-0152976. The wood preserving composition described in it comprises a wood preservative taken up in a water-soluble or water-swellable polymer which upon contact with water releases the wood preservative to the surrounding wood. As the wood preservative (that is to say, the active material) all substances can be used which are known for the purpose, but preferably boron and fluorine compounds are used, such as borax-boric acid mixtures and mixtures of bifluorides. Suitable water-soluble and water-swellable polymers are, for example, polyvinyl pyrrolidone, polyvinyl alcohol, polyethylene glycol, polyacrylamide, and the polymeric alloys disclosed in NL-A-7908799. The wood preserving composition is intended for use with existing wood constructions, such as window and door frames, and for this purpose takes the form of an object (pellets, granules, tablets, rods and the like) which can be placed in holes specially drilled for the purpose. If desired, the object is further provided with a water-permeable coating of water-soluble or water-swellable polymers to realize a more uniform release of active material.

One disadvantage of this known product is, however, that the release of active material to the surrounding wood is not initiated until a high moisture content is reached, namely, in the order of 25-34% wood humidity. As, in many cases, wood is already attacked at a lower wood humidity, this known wood preservative does not give an effective protection against attack of the wood by insects (such as termites which also attack dry wood) and micro-organisms (such as moulds, which attack wood at a wood humidity as low as about 21%). Moreover, when insufficient moisture is supplied, the active material tends to harden in time, which results in a lower solvent capacity and hence a reduced activity. Furthermore, a disadvantage of the polymeric alloys referred to is that they retain moisture.

Similar drawbacks are experienced with other known wood preservatives, such as borax pills, which also do not become active until at higher wood humidity values, petrify after some time, and by reason of their low activity have to be used in a substantial thickness, and pills on the basis of sodium benzoate as the active material, which do not spread through the wood until the humidity of the wood is in excess of 34%.

Still much greater, however, are the drawbacks inherent in wood preservatives which must be placed in drilled holes in the form of solutions in rupturable or liquid-permeable containers. In addition to major safety problems, aspects which may be pointed out are a disagreeable penetrant odour, leakage which causes discolouration of paint, and non-uniform distribution through the wood.

For wood preservation in the carpentry industry and carpenter's trade, in which new timber is treated preventatively, use is made of impregnation processes (dipping, spraying, injection, and the like) with solutions of active material. Here again, however, problems are encountered, such as insufficient penetration into the wood, the need of allowing the wood some days' of drying after treatment before it can be painted, environmental pollution by evaporation of solvent and/or active material and by leakage from storage vessels, and increase in wood moisture content (when aqueous solutions are used) by reason of which extra long drying periods are required and cracks may be formed. The active material is often such superficially absorbed in the wood, so that insufficient protection is realized in the interior of the wood, and moreover subsequent escape of the active material is possible if it is volatile, resulting in health problems for residents and a further decrease in activity.

The present invention provides a wood preservative which is suitable for use in treating existing wood constructions, such as door and window frames, beams and the like, and for treating new timber in the carpentry industry and trade, as well as for treating live trees (e.g. against Dutch elm disease), for combatting fungi in walls or the ground, for preserving monuments and civil engineering works (e.g., against pile-worm), and avoids the above disadvantages.

The wood preservative according to the present invention comprises a substance that is toxic to wood-attacking micro-organisms and/or insects and a water-soluble and water-swellable substance, and is characterized by also comprising 1-10% by weight of a water-attracting substance and 0.1-5% by weight of a water-repellent substance, said water-attracting substance being silicagel or a hygroscopic inorganic salt and said water-repllent substance being a water-soluble silicone or siloxane material.

Although the wood preservative according to the invention may comprise all known kinds of substances which are toxic to wood-attacking micro-organisms and/or insects, including metal compounds, such as tributyl tin oxide, salts of copper, chromium, arsenic, boron-containing compounds, organic pesticides, such as pentachlorophenol, lindane, DDT, etc., preferred compounds, by reason of high activity and slight environmental objections, are bifluorides, and the wood preservative according to the invention preferably contains one or more of the compounds $KHF_2$, $NaHF_2$ and $NH_4HF_2$.

In other preferred embodiments, methylene-bis-thiocyanate (MBT), thiocyanomethylthiobenzothiazole (TCMBT) or ammoniacal copper compounds are used as the toxic substance.

As regards the water-soluble or water-swellable substance, too, the wood preservative according to the invention may comprise a variety of types of substances having the properties referred to, including the polymers mentioned in EP-A-0152976. For reasons of effectiveness, price and biodegradability, we prefer water-soluble and water-swellable cellulose derivatives, such as the well-known methyl celluloses and special absorbers, such as the commercial product WSP A 250 of Aqualon GmbH & Co KG (a cellulose ether produced by reacting alkali metal cellulose with sodium monochloroacetate to form sodium carboxymethyl cellulose).

The wood preservative according to the invention is distinguished from all known compositions in that it contains in addition both a water-attracting substance and a water-repellent substance.

The water-attracting substance is silicagel or a hygroscopic inorganic salt, of which many are known. Very suitable is silicagel. Preferably, however, calcium chloride is used, because this substance attracts so much water that ultimately liquefaction occurs and because no substances are formed thereby which may cause damage to the wood to be treated. Usable, but less suitable, are substances such as magnesium oxide, magnesium chloride, magnesium sulphate, calcium oxide, calcium sulphate, phosphorus pentoxide, etc.

As a water-repellent substance, the wood preservative according to the invention contains a water-soluble silicone or siloxane material having water-repellent properties, such as, specifically, water-soluble silicones and polysiloxane compounds. One suitable compound is, for example, the silicone BS 47 product of Wacker-Chemie GmbH.

The wood preservative according to the invention may, if desired, contain other components, such as fillers (e.g., chalk, silicates, MgO), colourants, odourants, solvents, etc.

The relative quantities of the components may vary within wide limits. Commonly, the active substance will be present in a proportion of 1-20 % by weight, the water-soluble and water-swellable substance will be present in a proportion of 1-98 % by weight, preferably 20-97 % by weight, the water-attracting substance will be present in a proportion of 1-10 % by weight, and the water-repellent substance will be present in a proportion of 0.1-5 % by weight, all percentages being based on the total dry weight of the wood preservative.

The importance of the water-attracting substance is that it enables distribution of the preservative through the wood at a low wood humidity of, for example, as low as 14%. Without wishing to be bound by this theory, we suppose that the attraction of moisture by the water-attracting substance leads to a swelling of the water-soluble and water-swellable substance in the hole in which the wood preservative is placed. As a result, the preservative is firmly in contact with the surrounding wood and uniform penetration into the wood is ensured. The moisture attracted is not retained by the swellable substance as is the case with the polymeric alloys of NL-A-7908799. Further attraction of water leads to the components of the preservative going into solution and to the solution being spread into the wood as a result of capillary forces. When the solution has spread throughout an extended region and the moisture content has again dropped, the active substance is fixed in the wood partly by the entrained water-repellent substance under weakly acidic or alkaline conditions, and by virtue of the moisture-repellent properties of the water-repellent substance protected from being leached out with water.

The wood preservative according to the invention is preferably formed as an object which can be placed in a hole especially provided therefor in the wood. Although many forms are usable, e.g., pills, granules, tablets, the preservative is preferably embodied as an elongate rod-shaped or bar-shaped body. A large surface area is desirable and can be realized in many ways, for example, by means of pits and/or elevations, by grooves, or by screw threading the surface. For the manufacture of the shaped wood preservative according to the invention, several methods are available. In practice, however, pressing of the preservative in a suitable mould will be preferred, partly because this makes it possible to ensure a desired surface configuration.

In order to prevent users (workers and do-it-yourselfers) from contacting the toxic material, the wood preservative according to the invention can be supplied in a blister package in a film of synthetic plastics, and/or be formed so that the toxic material is only present, or substantially only present in the interior of the preservative. Preferably, in the latter case, the water-soluble and water-swellable substance and the water-attracting substance are contained in the outer regions of the wood preservative, while the active substance and the water-repellent substance are contained in the interior. However, if desired, the water-repellent substance can also be incorporated in the outer region. Multi-layer configurations are also possible, e.g., an outermost layer of swelling agent and water-attracting substance, an intermediate layer of swelling agent and toxic substance, and an innermost layer of swelling agent and water-repellent substance. In the first case it is further preferred for the rod-shaped wood preservative according to the invention to have a pointed end to facilitate penetration through the plastics film.

Although the dimensions of the shaped wood preservative according to the invention can in principle be varied within a wide range, a particular advantage of the present preservative resides in the possibility of using relatively small dimensions, so that narrow holes can be used and damage to the wood can be minimized. In a preferred embodiment, the preservative is rod-shaped, preferably with a screw-threaded surface, with a diameter of about 5 mm and of varying lengths, e.g., 20 mm, 40 mm and 60 mm, for which drilled holes with diameters of 6-8 mm are sufficient.

The wood preservative according to the invention can be used in existing wood constructions by skilled persons or by do-it-yourselfers, for prevention and maintenance, by drilling one or more holes at places most prone to wood attack, such as thresholds and generally wood parts located in or just above the ground and wood joints in window and door frames and the like, and by placing the wood preservative according to the invention in such holes, if desired using a blister package to avoid direct contact between the user and the preservative. Generally speaking, it will be preferred for the hole to be subsequently sealed, for which an appropriate cap or plug is suitable. Although this cap or plug can in principle be made of many kinds of materials, such as metal, wood and the like, it preferably consists of synthetic plastics, such as hard PVC, and preferably it can be connected to the introduced preservative by suitable means on the inside of the cap or plug and on the preservative according to the invention. Examples of means suitable for this purpose are a screw thread, a bayonet catch and a snap mechanism. On the outside, the cap or plug may be provided with one or more slots for manipulation with a tool, such as a screwdriver. This makes it possible for the cap or plug to be removed without damaging the wood. Removal may be desirable for the introduction of a new dose or for other reasons. The size of the cap or plug is selected to match the size of the wood preservative and the size of the drilled hole. Suitable for rod-shaped preservatives having a diameter of 5 mm are caps or plugs with an outside diameter (in the case of tapered taps or plugs a maximum outside diameter) of about 6-8 mm.

The wood preservative according to the invention can also be used for preventatively treating new timber in the carpentry industry and trade. In addition to the above and similar procedures for treating existing constructions, a specific application, automated to a greater or lesser extent, is possible in which aligned holes are drilled in wood members to be joined together, which holes have a depth of about half the rod-shaped preservative to be used according to the invention, subsequently the preservative is pressed in the hole of the subtending wood member, and thereafter the second wood member is positioned so that the protruding part of the preservative extends into the hole of the second wood member. In a preferred embodimente of the rod-shaped wood preservative according to the invention, which preferred embodiment is specifically suitable for this particular application, a ring is provided around the rod-shaped preservative in the middle, which in an automated process ensures correct positioning and is preferably made to be liquid-permeable (by means of perforations and/or by an appropriate selection of material, such as paper) so that the active substance can migrate through the ring from one wood member to the other. The central hole of the ring should be just sufficient to accommodate the rod-shaped preservative, and the outside diameter can vary within wide limits. A ring suitable for use in combination with a rod-shaped wood preservative having a diameter of 5 mm has an inside diameter of about 5 mm and an outside diameter of, preferably 12-20 mm.

Other preferred embodiments of the wood preservative according to the invention employ a basket or tubular member, for example, of synthetic plastics or another substance capable of being press-moulded (possibly of a swellable substance, such as WSP A 250) as a container for the toxic substance and other ingredients according to the invention. The contents may have the form of one or more pressed rods, but alternatively may consist of a loose powder. The baskets may be made in different sizes, for example, baskets of 2 cm, 4 cm and 6 cm long. When the contents consist of pressed rods of, for example, 7 mm × 16 mm, these small, medium and large sizes of baskets may be filled with 1, 2 and 3 rods, respectively. Filling with a loose powder, on the other hand, has the advantage that the tube can be fully filled and that the desired activity of the preservative is initiated sooner.

These preferred embodiments have a number of important advantages over and above pressed rods, such as: more stable packing, so that the preservative can be placed in position with greater facility; less prone to breakage; more constant composition of the contents, so that a more uniform distribution is ensured; more prolonged and more uniform contact with the surrounding wood owing to egress via the openings in the basket; a greater safety in use, because skin contact is excluded; when used injudiciously, placed with wet hands, or put into the mouth, users only come into contact with traces of the toxic substance and not with the total quantity of toxic substance; and various practical advantages, such as less critical requirements with regard to the sealing cap or plug which now forms part of the hole, a fabrication process that is more easily automated, a readily automated introduction in the carpentry industry, and easy removability from the wood, e.g. when treated window or door frames are to be demolished or when used incorrectly. By drilling a hole in the wood with a depth slightly less than the length of the basket, the basket can be pushed direct into contact with the wood when introduced.

The invention will now be described with reference to the accompanying drawings, in which

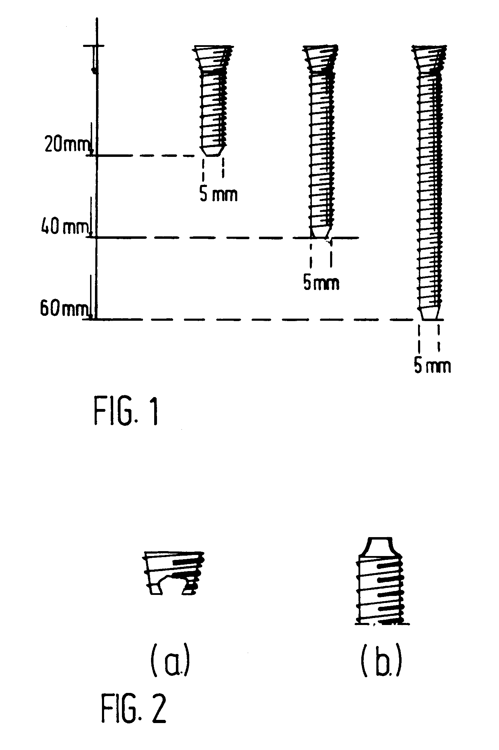

Fig. 1 shows rod-shaped wood preservatives according to the invention with a threaded surface and provided with a sealing plug, in different lengths;

Fig. 2a shows a suitable plug with external screw-thread;

Fig. 2b shows the end of a corresponding rod-shaped wood preservative which can be connected to the plug by means of a snap system;

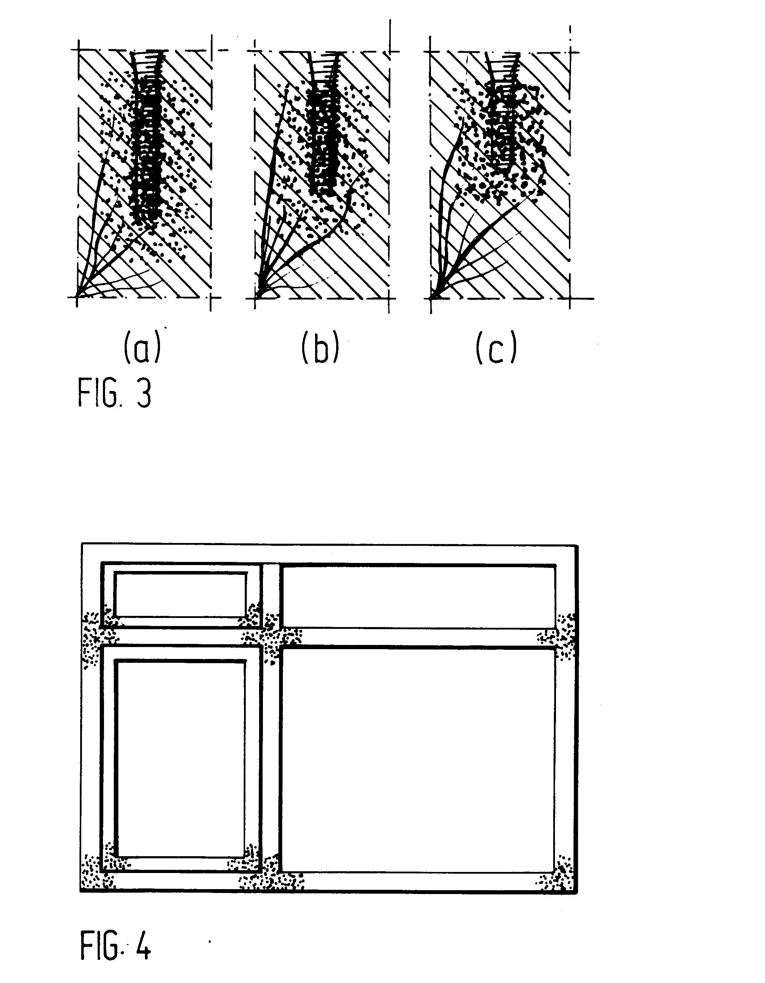

Fig. 3 shows wood members after being provided with wood preservatives according to the invention and after the active substance has spread into the surrounding region;

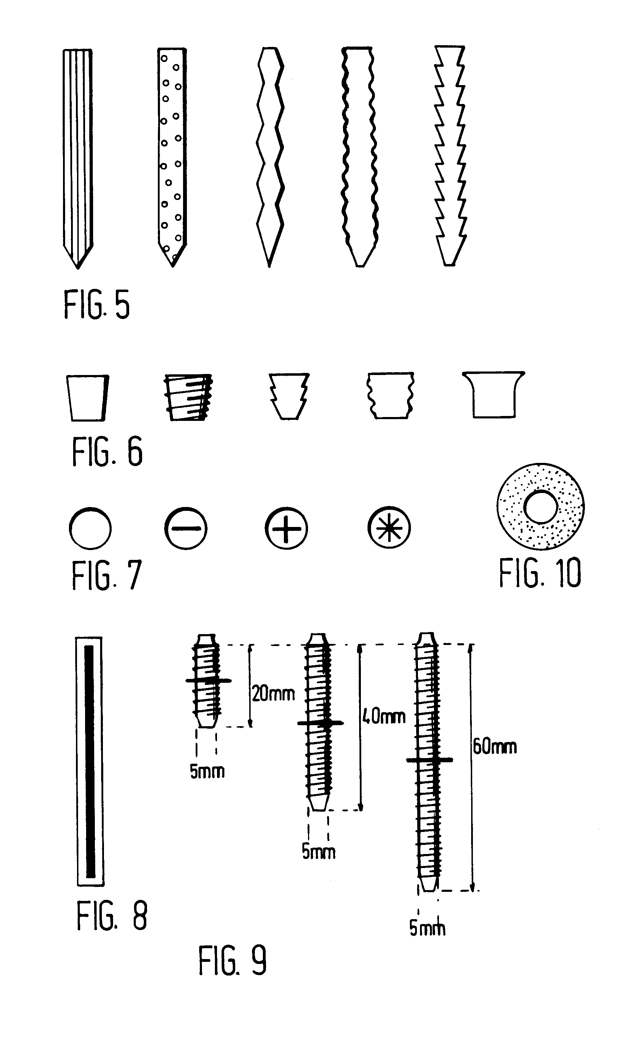

Fig. 4 shows a window and frame construction after being treated in accordance with the invention and after the active substance has spread (the distribution is shown, although in practice not visible from the outside);

Fig. 5 shows variants of rod-shaped wood preservatives according to the invention;

Fig. 6 shows variants of suitable sealing caps and plugs;

Fig. 7 shows variants of the outside (top) of the caps and plugs;

Fig. 8 shows an embodiment of a rod-shaped wood preservative according to the invention in which the active substance (bifluoride) together with the water-repellent substance (silicones) is encapsulated in a coat of the water-soluble and water-swellable substance (methyl cellulose) and the water-attracting substance (calcium chloride);

Fig. 9 shows rod-shaped wood preservatives according to the invention with a screw-threaded surface and provided in the middle with a ring of liquid-absorbing paper, in various lengths;

Fig. 10 shows a perforated ring suitable for use with the embodiments of Fig. 9;

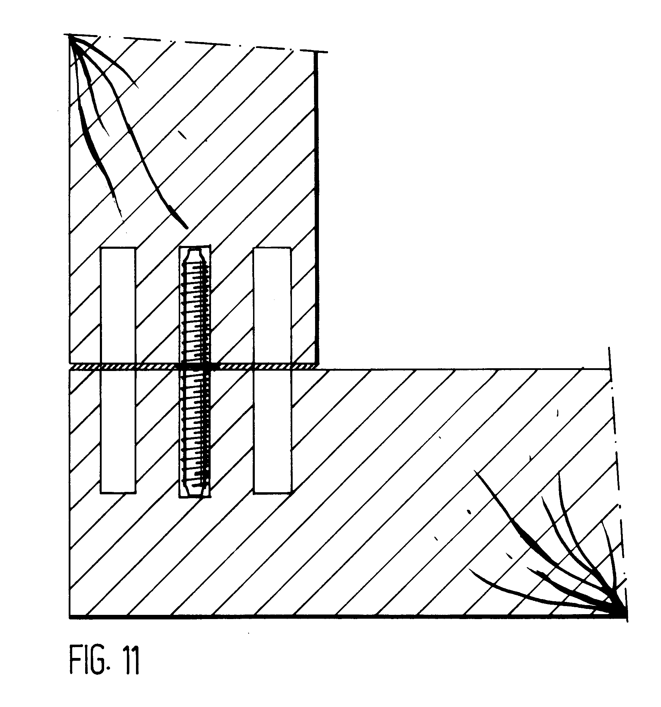

Fig. 11 shows a wood joint with dowels and glue between two wood members, using a wood preservative as shown in Fig. 9;

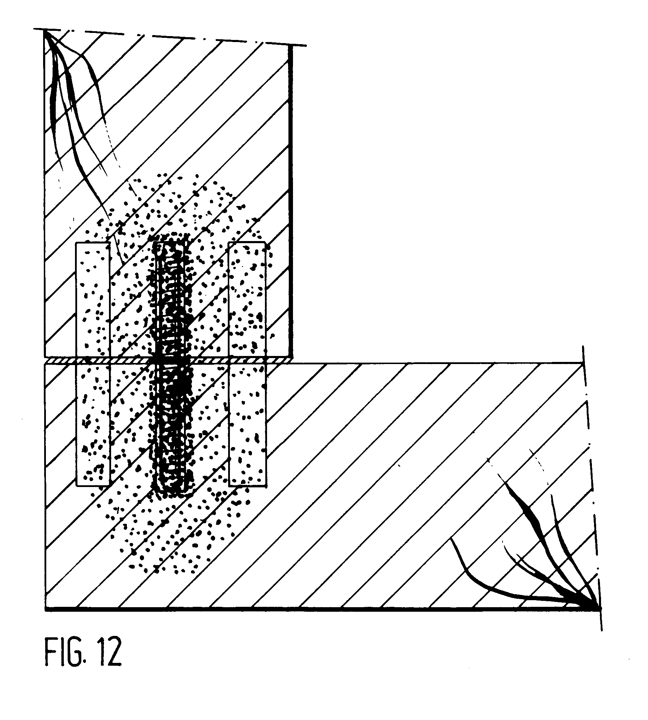

Fig. 12 shows the same wood joint after the active substance has spread into the surrounding region;

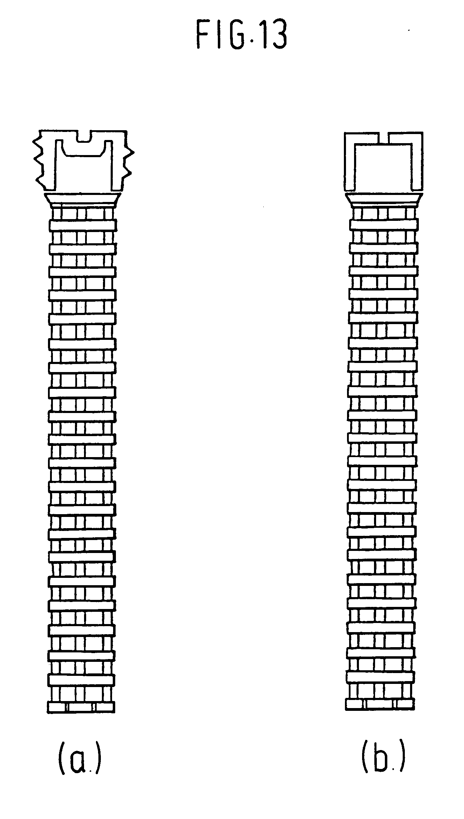

Fig. 13a shows a basket-shaped wood preservative according to the invention, suitable for the maintenance of existing constructions; and

Fig. 13b shows a basket-shaped wood preservative according to the invention, suitable for use in the carpentry industry for new-building purposes.

One example of a suitable composition of the wood preservative according to the invention is as follows:

$CaCl_2$ : about 5 % by weight
silicones : about 0,5 % by weight
bifluoride : about 2 % by weight
methyl cellulose: about 92,5 % by weight

The proportion of toxic substance is naturally adapted to the wood volume to be treated.

## Claims

1. A wood preservative comprising a substance that is toxic to wood-attacking micro-organisms and/or insects and a water-soluble and water-swellable substance, characterized by also comprising 1-10% by weight of a water-attracting substance and 0.1-5% by weight of a water-repellent substance, said water-attracting substance being silicagel or a hygroscopic inorganic salt and said water-repellent substance being a water-soluble silicone or siloxane material.

2. A wood preservative as claimed in claim 1, characterzied by comprising as the substance that is toxic to micro-organisms and/or insects one or more bifluorides, methylene-bis-thiocyanate (MBT), thiocyanomethylthio benzothiazol (TCMBT) or ammoniacal copper compounds.

3. A wood preservative as claimed in claim 2, characterized by comprising one or more of the compounds $KHF_2$, $NaHF_2$ and $NH_4HF_2$.

4. A wood preservative as claimed in any of claims 1-3, characterized by comprising as the water-soluble and water-swellable substance one or more water-soluble and water-swellable cellulose derivatives.

5. A wood preservative as claimed in claim 4, characterized by comprising one or more methyl celluloses or carboxymethyl celluloses.

6. A wood preservative as claimed in any of claims 1-5, characterized by comprising $CaCl_2$ as the water-attracting substance.

7. A wood preservative as claimed in any of claims 1-6, characterized in that the preservative is formed as an object that can be placed in a drilled hole.

8. A wood preservative as claimed in claim 7, characterized by being formed as a rod-shaped object.

9. A wood preservative as claimed in claim 8, characterized in that the rod-shaped preservative is provided with an increased surface area.

10. A wood preservative as claimed in claim 9, characterized in that the rod-shaped preservative has a screw-threaded surface.

11. A wood preservative as claimed in any of claims 8-10, characterized in that a ring is provided around the rod-shaped preservative.

12. A wood preservative as claimed in claim 11, characterized in that the ring is liquid-permeable.

13. A wood preservative as claimed in claim 12, characterized in that the ring is perforated.

14. A wood preservative as claimed in claim 12, characterized in that the ring is made of paper.

15. A wood preservative as claimed in any of claims 7-10, characterized in that the preservative comprises an appropriate cap or plug for closing a bore hole containing the preservative.

16. A wood preservative as claimed in claim 15, characterized in that the cap or plug is provided on the inside with one or more means for connecting it with the preservative, said preservative being provided with corresponding means.

17. A wood preservative as claimed in claim 15 or 16, characterized in that the cap or plug is provided on the outside with one or more slots to enable it to be tightened up or unscrewed by means of a tool, such as a screwdriver.

18. A wood preservative as claimed in any of claims 15-17, characterized in that the cap or plug is made of synthetic plastics material.

19. A wood preservative as claimed in any of claims 1-17, characterized in that the preservative is packaged in a synthetic plastics film.

20. A wood preservative as claimed in any of claims 1-6, characterized in that the preservative is formed as an elongate basket containing the toxic substance and other ingredients of the preservative, either in the form of a loose powder or in the form of one or more pressed rods.

21. A method of preserving wood by treating it with a wood preservative comprising a substance that is toxic to wood-attacking micro-organisms and/or insects and a water-swelling substance, characterized by using a wood preservative as claimed in any of claims 1-20.

22. A method as claimed in claim 21, characterized in that the preservative is used preventatively with new wood by drilling aligned holes in wooden members to be joined together, placing a rod-shaped wood preservative as claimed in any of claims 8-14, or a basket-shaped wood preservative as claimed in claim 20, in the hole formed in the subtending member and then placing the second member in position so that a protecting part of the elongate preservative extends into the hole formed in said second member.

23. A method as claimed in claim 21, characterized in that the preservative is used in existing wooden constructions by drilling holes in places prone to wood attack, and placing a wood preservative as claimed in any of claims 7-10, 15-18 and 20 in such holes.

**Revendications**

1. Agent de préservation du bois, comprenant une substance toxique pour les micro-organismes et/ou insectes prédateurs du bois et une substance soluble dans l'eau et se gonflant à l'eau, **caractérisé en ce qu'**il contient également 1-10 % en poids d'une substance attirant l'eau et 0,1-5 % en poids d'une substance repoussant l'eau, la dite substance attirant l'eau étant un silicagel ou un sel inorganique hygroscopique et la dite substance repoussant l'eau étant un matériau de silicone ou de siloxane soluble dans l'eau.

2. Agent de préservation du bois selon la revendication 1, **caractérisé en ce qu'**il contient comme substance toxique pour les micro-organismes et/ou insectes prédateurs du bois un ou plusieurs difluorures, du thiocyanate de méthylène-bis (MBT), du thiocyanométhylthio benzothiazol (TCMBT) ou des composés ammoniaqués du cuivre.

3.   Agent de préservation du bois selon la revendication 2, **caractérisé en ce qu'**il contient un ou plusieurs des composés $KHF_2$, $NaHF_2$ et $NH_4HF_2$.

4.   Agent de préservation du bois selon l'une quelconque des revendications 1-3, **caractérisé en ce qu'**il contient comme substance soluble dans l'eau ou gonflable à l'eau un ou plusieurs dérivés de cellulose solubles dans l'eau et se gonflant à l'eau.

5.   Agent de préservation du bois selon la revendication 4, **caractérisé en ce qu'**il contient une ou plusieurs méthylcelluloses ou carboxyméthylcelluloses.

6.   Agent de préservation du bois selon l'une quelconque des revendications 1-5, **caractérisé en ce qu'**il contient du $CaCl_2$ comme substance attirant l'eau.

7.   Agent de préservation du bois selon l'une quelconque des revendications 1-6, **caractérisé en ce que** l'agent de préservation est réalisé sous la forme d'un objet pouvant être placé dans un trou foré.

8.   Agent de préservation du bois selon la revendication 7, **caractérisé en ce qu'**il est réalisé sous la forme d'un objet en forme de tige.

9.   Agent de préservation du bois selon la revendication 8, **caractérisé en ce que** l'agent de préservation en forme de tige est doté d'une superficie agrandie.

10.  Agent de préservation du bois selon la revendication 9, **caractérisé en ce que** l'agent de préservation en forme de tige possède une surface à filet hélicoïdal.

11.  Agent de préservation du bois selon l'une quelconque des revendications 8-10, **caractérisé en ce qu'**un anneau est prévu autour de l'agent de préservation en forme de tige.

12.  Agent de préservation du bois selon la revendication 11, **caractérisé en ce que** l'anneau est perméable à l'eau.

13.  Agent de préservation du bois selon la revendication 12, **caractérisé en ce que** l'anneau est perméable aux liquides.

14.  Agent de préservation du bois selon la revendication 12, **caractérisé en ce que** l'anneau est fait en papier.

15.  Agent de préservation du bois selon l'une quelconque des revendications 7-10, **caractérisé en ce que** l'agent de préservation comprend un capuchon ou un bouchon appropriés fermant un trou foré contenant l'agent de préservation.

16.  Agent de préservation du bois selon la revendication 15, **caractérisé en ce que** le capuchon ou le bouchon sont dotés du côté intérieur d'un ou plusieurs moyens en vue de les relier à l'agent de préservation, le dit agent de préservation étant doté de moyens correspondants.

17.  Agent de préservation du bois selon la revendication 15 ou 16, **caractérisé en ce que** le capuchon ou le bouchon sont dotés du côté extérieur d'une ou de plusieurs fentes leur permettant d'être serrés ou dévissés à l'aide d'un outil tel qu'un tournevis.

18.  Agent de préservation du bois selon l'une quelconque des revendications 15-17, **caractérisé en ce que** le capuchon ou le bouchon sont fabriqués en un matériau plastique synthétique.

19.  Agent de préservation du bois selon l'une quelconque des revendications 1-17, **caractérisé en ce que** l'agent de préservation est emballé dans un film plastique synthétique.

20.  Agent de préservation du bois selon l'une quelconque des revendications 1-6, **caractérisé en ce que** l'agent de préservation est réalisé sous la forme d'un panier allongé contenant la substance toxique et d'autres ingrédients de l'agent de préservation, soit sous la forme d'une poudre libre soit sous la forme d'une ou plusieurs tiges comprimées.

21.  Procédé de préservation du bois consistant à traiter ce dernier au moyen d'un agent de préservation du bois contenant une substance toxique pour les micro-organismes et/ou insectes prédateurs du bois et une substance se gonflant à l'eau, **caractérisé par** le recours à un agent de préservation du bois selon l'une quelconque des revendications 1-20.

**22.** Procédé selon la revendication 21, **caractérisé en ce que** l'agent de préservation est utilisé à titre préventif pour du bois neuf, en forant des trous alignés dans des éléments en bois destinés à être assemblés, en plaçant un agent de préservation du bois en forme de tige selon l'une quelconque des revendications 8-14 ou un agent de préservation du bois en forme de panier selon la revendication 20 dans le trou réalisé dans l'élément sous-jacent, et en plaçant ensuite le second élément en position, de sorte qu'une partie protectrice de l'agent de préservation allongé s'étend dans le trou réalisé dans le dit second élément.

**23.** Procédé selon la revendication 21, **caractérisé en ce que** l'agent de préservation est utilisé dans des structures en bois existantes, en forant des trous en des emplacements sensibles à l'attaque du bois, et en plaçant un agent de préservation du bois selon l'une quelconque des revendications 15-18 et 20 dans ces trous.

**Patentansprüche**

**1.** Holzkonservierungsmittel, versehen mit einem Stoff, der für holzangreifende Mikroorganismen und/oder Insekten giftig ist, und einem wasserlöslichen und wasserquellfähigen Stoff, dadurch gekennzeichnet, daß es auch 1 bis 10 Gew.% eines wasseranziehenden Stoffes und 0,1 bis 5 Gew.% eines wasserabstoßenden Stoffes enthält, wobei der wasseranziehende Stoff Silicagel oder ein hygroskopisches anorganisches Salz und der wasserabstoßende Stoff ein wasserlösliches Silicon- oder Siloxanmaterial ist.

**2.** Holzkonservierungsmittel nach Anspruch 1, dadurch gekennzeichnet, daß es als Stoff, der für Mikroorganismen und/oder Insekten giftig ist, ein oder mehrere Bifluoride, Methylen-bis-thiocyanate (MBT), Thiocyanmethylthiobenzothiazol (TCMBT) oder ammoniakalische Kupferverbindungen enthält.

**3.** Holzkonservierungsmittel nach Anspruch 2, dadurch gekennzeichnet, daß es eine oder mehrere der Verbindungen $KHF_2$, $NaHF_2$ und $NH_4HF_2$ enthält.

**4.** Holzkonservierungsmittel nach einem der Ansprüche 1 bis 3, dadurch gekennzeichnet, daß es als wasserlöslichen und wasserquellfähigen Stoff ein oder mehrere wasserlösliche und wasserquellfähige Derivate enthält.

**5.** Holzkonservierungsmittel nach Anspruch 4, dadurch gekennzeichnet, daß es eine oder mehrere Methylcellulosen oder Carboxymethylcellulosen enthält.

**6.** Holzkonservierungsmittel nach einem der Ansprüche 1 bis 5, dadurch gekennzeichnet, daß es als wasseranziehenden Stoff $CaCl_2$ enthält.

**7.** Holzkonservierungsmittel nach einem der Ansprüche 1 bis 6, dadurch gekennzeichnet, daß das Konservierungsmittel die Gestalt eines in ein gebohrtes Loch einsetzbaren Gegenstandes aufweist.

**8.** Holzkonservierungsmittel nach Anspruch 7, dadurch gekennzeichnet, daß es die Gestalt eines stabförmigen Gegenstandes aufweist.

**9.** Holzkonservierungsmittel nach Anspruch 8, dadurch gekennzeichnet, daß das stabförmige Konservierungsmittel mit einer vergrößerten Oberfläche versehen ist.

**10.** Holzkonservierungsmittel nach Anspruch 9, dadurch gekennzeichnet, daß das stabförmige Konservierungsmittel eine gewindeartige Oberfläche aufweist.

**11.** Holzkonservierungsmittel nach einem der Ansprüche 8 bis 10, dadurch gekennzeichnet, daß ein Ring um das stabförmige Konservierungsmittel herum angeordnet ist.

**12.** Holzkonservierungsmittel nach Anspruch 11, dadurch gekennzeichnet, daß der Ring flüssigkeitsdurchlässig ist.

**13.** Holzkonservierungsmittel nach Anspruch 12, dadurch gekennzeichnet, daß der Ring durchlöchert ist.

**14.** Holzkonservierungsmittel nach Anspruch 12, dadurch gekennzeichnet, daß der Ring aus Papier hergestellt ist.

**15.** Holzkonservierungsmittel nach einem der Ansprüche 7 bis 10, dadurch gekennzeichnet, daß das Konservierungsmittel einen geeigneten Deckel oder Stöpsel zum Verschließen eines das Konservierungsmittel enthaltenden Bohrloches enthält.

**16.** Holzkonservierungsmittel nach Anspruch 15, dadurch gekennzeichnet, daß der Deckel oder Stöpsel auf der Innenseite mit einem oder mehreren Mitteln zum Verbinden mit dem Konservierungsmittel versehen ist, welches Konservierungsmittel mit entsprechenden Mitteln versehen ist.

17. Holzkonservierungsmittel nach Anspruch 15 oder 16, dadurch gekennzeichnet, daß der Deckel oder Stöpsel auf der Anßenseite mit einem oder mehreren Schlitzen zum An- oder Anschrauben durch ein Werkzeug, z.B. einen Schraubenzieher, versehen ist.

18. Holzkonservierungsmittel nach einem der Ansprüche 15 bis 17, dadurch gekennzeichnet, daß der Deckel oder Stöpsel aus Kunststoffmaterial hergestellt ist.

19. Holzkonservierungsmittel nach einem der Ansprüche 1 bis 17, dadurch gekennzeichnet, daß das Konservierungsmittel in einen Kunststoffilm verpackt ist.

20. Holzkonservierungsmittel nach einem der Ansprüche 1 bis 6, dadurch gekennzeichnet, daß das Konservierungsmittel die Gestalt eines länglichen Korbes aufweist, der den giftigen Stoff und andere Bestandteile des Konservierungsmittels enthält, entweder in Form eines losen Pulvers oder in Form eines oder mehrerer Preßstäbe.

21. Verfahren zur Holzkonservierung durch Behandlung mit einem Holzkonservierungsmittel, versehen mit einem Stoff, der für holzangreifende Mikroorganismen und/oder Insekten giftig ist, und einem wasserquellfähigen Stoff, dadurch gekennzeichnet, daß man ein Holzkonservierungsmittel nach einem der Ansprüche 1 bis 20 verwendet.

22. Verfahren nach Anspruch 21, dadurch gekennzeichnet, daß man das Konservierungsmittel präventiv bei Neuholz verwendet, indem man fluchtende Löcher in zusammenzufügende Holzelemente bohrt, in das im gegenüberliegenden Element gebildete Loch ein stabförmiges Holzkonservierungsmittel nach einem der Ansprüche 8 bis 14 oder ein korbförmiges Holzkonservierungsmittel nach Anspruch 20 einbringt und dann das zweite Element in eine solche Lage bringt, daß ein vorspringender Teil des länglichen Konservierungsmittels in das im zweiten Element gebildete Loch hineinragt.

23. Verfahren nach Anspruch 21, dadurch gekennzeichnet, daß man das Konservierungsmittel in bestehenden Holzkonstruktionen verwendet, indem man an Stellen, die zur Holzfäule neigen, Löcher bohrt und ein Holzkonservierungsmittel nach einem der Ansprüche 7 bis 10, 15 bis 18 und 20 in diese Löcher einbringt.

FIG. 1

(a)          (b.)

FIG. 2

(a)  (b)  (c)

FIG. 3

FIG. 4

FIG. 5

FIG. 6

FIG. 7

FIG. 10

FIG. 8

20mm

40mm

60mm

5mm

5mm

5mm

FIG. 9

FIG. 11

FIG. 12

# FIG·13

(a.)                    (b.)